(19) Europäisches Patentamt
European Patent Office
Office européen des brevets

(11) **EP 1 496 024 A1**

(12) **EUROPEAN PATENT APPLICATION**

(43) Date of publication:
**12.01.2005 Bulletin 2005/02**

(51) Int Cl.$^7$: **C03B 37/014**

(21) Application number: **04015874.3**

(22) Date of filing: **06.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **07.07.2003 JP 2003192930**<br>**07.07.2003 JP 2003192916**<br>**07.07.2003 JP 2003192927** | (71) Applicant: **SUMITOMO ELECTRIC INDUSTRIES, Ltd**<br>**Osaka-shi, Osaka 541-0041 (JP)**<br><br>(72) Inventor: **Ishihara, Tomohiro c/o Yokohama Works**<br>**Yokohama-shi, Kanagawa (JP)**<br><br>(74) Representative: **HOFFMANN - EITLE**<br>**Patent- und Rechtsanwälte**<br>**Arabellastrasse 4**<br>**81925 München (DE)** |

(54) **Method of producing glass-particle-deposited body and glass-particle-synthesizing burner**

(57)    A method can stably produce a high-quality glass-particle-deposited body by depositing glass particles in an intended state, and a burner synthesizes glass particles. The method uses a burner comprising a material-gas-feeding pipe at its center. In one aspect of the method, while glass particles are synthesized with the burner to be deposited, the magnitude of bending at the tip of the material-gas-feeding pipe is maintained at a value of at most 1.2 mm. In another aspect, while glass particles are synthesized with the burner to be deposited, the magnitude of bending at the bottom end of the material-gas-feeding pipe is maintained at a value of at most 0.3 mm. Another burner for synthesizing glass particles comprises a material-gas-feeding pipe and a plurality of gas-feeding pipes for feeding gases needed to form a flame. In this burner, in at least one combination of neighboring two pipes among these pipes, the two pipes are mutually linked at a plurality of longitudinal locations. In this case, the at least one combination is or includes the combination of the material-gas-feeding pipe and the neighboring pipe.

FIG. 4A

EP 1 496 024 A1

**Description**

BACKGROUND OF THE INVENTION

Field of the Invention

The present invention relates to a method of producing a glass-particle-deposited body by synthesizing glass particles with a burner to deposit the glass particles onto the starting member and also relates to a glass-particle-synthesizing burner.

Description of the Background Art

As a method of producing an optical fiber, a production method is known that comprises the steps of producing a glass-particle-deposited body, heating and vitrifying the glass-particle-deposited body to obtain an optical fiber preform, and drawing the optical fiber preform. The types of the methods of producing a glass-particle-deposited body include a vapor-phase axial deposition (VAD) method and an outside vapor deposition (OVD) method. These methods comprise the following steps:

(a) a burner comprising a plurality of ports ejects a combustible gas, a combustion-assisting gas, and a glass-material gas;
(b) the glass material is hydrolyzed in the flame to produce glass particles; and
(c) the glass particles are deposited onto the surface of a starting member.

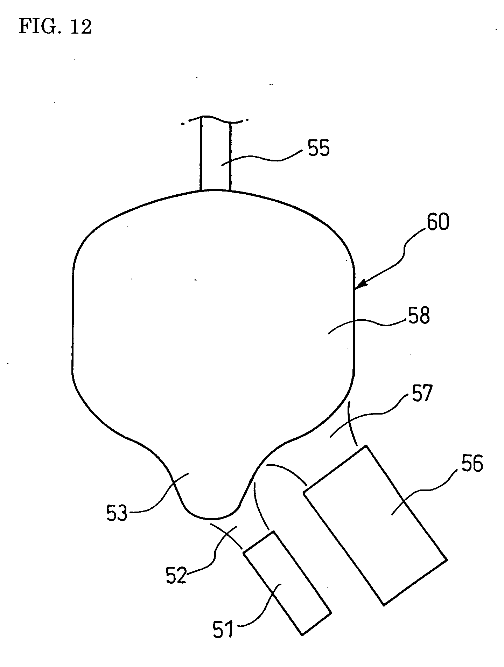

Figure 12 is a schematic diagram showing a state in which a glass-particle-deposited body for forming a single-mode optical fiber is produced by the VAD method. A core-synthesizing burner 51 forms an oxyhydrogen flame 52. A glass-material gas containing germanium tetrachloride ($GeCl_4$) and silicon tetrachloride ($SiCl_4$) is blown into the flame 52 to be hydrolyzed to synthesize glass particles for forming the core. The synthesized glass particles are deposited at the lower portion of a starting member 55, which is fixed to a rotary shaft. Thus, a porous glass body 53 for forming the core portion is formed. Similarly, a cladding-synthesizing burner 56 forms another oxyhydrogen flame 57. A glass-material gas comprising $SiCl_4$ is blown into the flame 57 to form a porous glass body 58 for forming the cladding portion such that it surrounds the porous glass body 53 for forming the core portion. This process produces a glass-particle-deposited body 60 consisting of the porous glass body 53 for forming the core portion and the porous glass body 58 for forming the cladding portion.

This type of glass-particle-deposited body is produced with a widely used burner having a multiple structure in which a plurality of circular pipes having different diameters are placed concentrically. Such a burner has been disclosed in the published Japanese patent applications *Tokukaihei* 4-228443, *Tokukaihei* 7-33467, and *Tokukaihei* 7-242434. A port at the center of the burner ejects a glass-material gas, ports surrounding the central port eject gases for forming a flame, and the glass-material gas is hydrolyzed in the flame to synthesize glass particles.

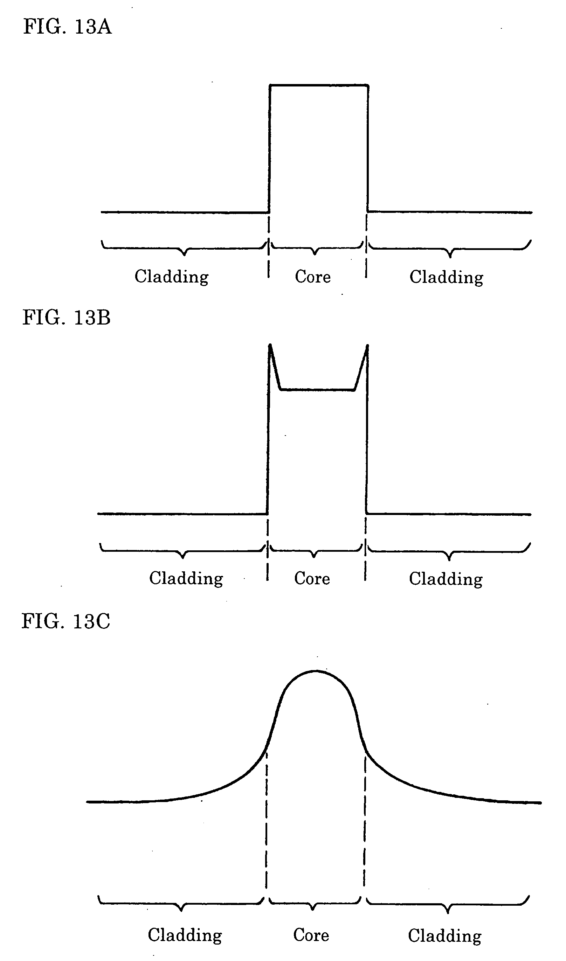

To improve the transmission property of an optical fiber, it is desirable that the refractive-index profile has a steplike shape as shown in Fig. 13A. Furthermore, to stabilize the transmission property of an optical fiber, it is desirable to minimize the variation in the refractive-index profile both within a preform and between preforms.

The porous glass body for forming the core portion is doped with germanium oxide ($GeO_2$) to increase the refractive index. Consequently, the refractive-index profile of an optical fiber depends on the distribution of the dopant. To meet the foregoing requirements, it is necessary both to distribute the dopant with the steplike shape and to minimize its variation.

Nevertheless, the observation of the refractive-index profile of conventionally produced optical fibers has revealed that in some cases, the core portion has a reduced diameter and the refractive-index profile has a local maximum portion at the interface between the core and the cladding as shown in Fig. 13B. Conversely, in some cases, the core portion has an increased diameter and the refractive-index profile has a gradual slope at the interface between the core and the cladding as shown in Fig. 13C. In other words, the conventional method sometimes fails to stably deposit the glass particles with an intended state, producing undesirable variations in the diameter and refractive index of the core of the optical fiber.

SUMMARY OF THE INVENTION

An object of the present invention is to offer a method capable of stably producing a high-quality glass-particle-deposited body by depositing glass particles in an intended state and to offer a glass-particle-synthesizing burner.

According to the present invention, the foregoing object is attained by offering the following method of producing a glass-particle-deposited body. The method uses a burner comprising at its center a material-gas-feeding pipe for ejecting a glass-material gas and comprises the following steps:

(a) synthesizing glass particles by using the burner; and
(b) depositing the glass particles onto a starting member.

According to one aspect of the present invention, the method is specified by the condition that while the glass particles are synthesized with the burner to be deposited, the magnitude of bending at the tip of the material-gas-feeding pipe is maintained at a value of at most 1.2 mm. In the method of this aspect, the material-gas-feeding pipe may have at least one of the following relationships:

$$1{,}975 \le L^4/D^2 \le 1.15 \times 10^9,$$

where $L$ is the length of the pipe, and
$D$ is the cross-sectional area of the pipe; and

$$0 \text{ kgf/mm}^2 \le W/D \le 2.0 \text{ kgf/mm}^2,$$

where $W$ is a load applied to the bottom end of the pipe.
In this specification and the accompanying claims, when the term "cross-sectional area" is used in relation to a pipe, the term means "the cross-sectional area in the wall-thickness portion of the pipe."
According to another aspect of the present invention, the method is specified by the condition that while the glass particles are synthesized with the burner to be deposited, the magnitude of bending at the bottom end of the material-gas-feeding pipe is maintained at a value of at most 0.3 mm. In the method of this aspect, the material-gas-feeding pipe may have at least one of the following relationships:

$$1 \le M^4/D^2 \le 3.81 \times 10^4,$$

where $M$ is the distance between a supporting point and the bottom end of the pipe, and
$D$ is the cross-sectional area of the pipe; and

$$0 \text{ kgf/mm}^2 \le W/D \le 0.36 \text{ kgf/mm}^2,$$

where $W$ is a load applied to the bottom end of the pipe.
In the method of this aspect, the material-gas-feeding pipe may be supported by applying to it a force in the direction opposite to that of the load $W$.
In the above-described two aspects, the burner may further comprise a plurality of gas-feeding pipes for feeding a plurality of gases needed to form a flame for combusting the glass-material gas, and in at least one combination of neighboring two pipes among the material-gas-feeding pipe and the gas-feeding pipes, the two pipes may be mutually linked at a plurality of longitudinal locations. In this case, the at least one combination is or includes the combination of the material-gas-feeding pipe and the neighboring pipe.
According to yet another aspect of the present invention, the present invention offers the following glass-particle-synthesizing burner. The burner comprises at its center a material-gas-feeding pipe for ejecting a glass-material gas, and the pipe satisfies the following relationship:

$$1{,}975 \le L^4/D^2 \le 1.15 \times 10^9,$$

where $L$ is the length of the pipe, and
$D$ is the cross-sectional area of the pipe.
According to yet another aspect of the present invention, the present invention offers the following glass-particle-synthesizing burner. The burner comprises at its center a material-gas-feeding pipe for ejecting a glass-material gas, and the pipe satisfies the following relationship:

$$1 \leq M^4/D^2 \leq 3.81 \times 10^4,$$

where $M$ is the distance between a supporting point and the bottom end of the pipe, and

$D$ is the cross-sectional area of the pipe.

According to yet another aspect of the present invention, the present invention offers the following glass-particle-synthesizing burner. The burner comprises:

(a) a material-gas-feeding pipe for ejecting a glass-material gas; and
(b) a plurality of gas-feeding pipes for feeding a plurality of gases needed to form a flame for combusting the glass-material gas.

In this burner, in at least one combination of neighboring two pipes among the material-gas-feeding pipe and the gas-feeding pipes, the two pipes are mutually linked at a plurality of longitudinal locations. In this case, the at least one combination is or includes the combination of the material-gas-feeding pipe and the neighboring pipe. In the burner of this aspect, in the at least one combination of neighboring two pipes, the two pipes are mutually linked at a plurality of longitudinal locations, and the pipe having the maximum cross-sectional area may have a cross-sectional area of at least 30 mm$^2$. In the burner of this aspect, among the material-gas-feeding pipe and the gas-feeding pipes, a pipe placed at the outer side may have a cross-sectional area larger than that of a pipe placed at the inner side.

According to yet another aspect of the present invention, the present invention offers the following method of producing a glass-particle-deposited body. The method uses the glass-particle-synthesizing burner of the above-described aspect and comprises the following steps:

(a) synthesizing glass particles by using the burner; and
(b) depositing the glass particles onto a starting member.

Advantages of the present invention will become apparent from the following detailed description, which illustrates the best mode contemplated to carry out the invention. The invention can also be carried out by different embodiments, and their details can be modified in various respects, all without departing from the invention. Accordingly, the accompanying drawing and the following description are illustrative in nature, not restrictive.

BRIEF DESCRIPTION OF THE DRAWING

The present invention is illustrated to show examples, not to show limitations, in the figures of the accompanying drawing. In the drawing, the same reference signs and numerals refer to similar elements.

In the drawing:

Figure 1 is a schematic diagram showing an apparatus for producing a glass-particle-deposited body, the apparatus being to be used in the present invention.

Figures 2A and 2B are schematic diagrams showing the first embodiment of the glass-particle-synthesizing burner of the present invention, in which Fig. 2A is a front view and Fig. 2B is a cross-sectional view including the center axis of the burner.

Figures 3A and 3B are schematic diagrams showing the second embodiment of the glass-particle-synthesizing burner of the present invention, in which Fig. 3A is a cross-sectional view including the center axis of the burner and Fig. 3B is a cross-sectional view at the III - III section in Fig. 3A.

Figure 4A is a schematic diagram explaining the "magnitude of bending" of the material-gas-feeding pipe by using the tip portion of the burner as an example, and Fig. 4B is a schematic diagram explaining it by using the bottom-end portion of the burner as another example.

Figure 5 is a graph showing an example of the relationship between the longitudinal position of the pipe and the magnitude of bending.

Figures 6A to 6C are front views showing other embodiments of the glass-particle-synthesizing burner of the present invention, and Fig. 6D is a cross-sectional view showing another embodiment of the glass-particle-synthesizing burner of the present invention, the cross-sectional view including the center axis of the burner.

Figure 7A is a graph showing an example of the relationship between the magnitude of bending and the deviation in the relative refractive-index difference of the core, and Fig. 7B is a graph showing an example of the relationship between the magnitude of bending and the deviation in the core diameter.

Figure 8A is a graph showing an example of the relationship between the ratio $L^4/D^2$ and the deviation in the relative refractive-index difference of the core, and Fig. 8B is a graph showing an example of the relationship between the ratio $L^4/D^2$ and the deviation in the core diameter.

Figure 9A is a graph showing an example of the relationship between the ratio *W/D* and the deviation in the relative refractive-index difference of the core, and Fig. 9B is a graph showing an example of the relationship between the ratio *W/D* and the deviation in the core diameter.

Figure 10A is a graph showing an example of the relationship between the magnitude of bending and the deviation in the relative refractive-index difference of the core, and Fig. 10B is a graph showing an example of the relationship between the magnitude of bending and the deviation in the core diameter.

Figure 11A is a graph showing an example of the relationship between the magnitude of bending and the deviation in the relative refractive-index difference of the core, and Fig. 11B is a graph showing an example of the relationship between the magnitude of bending and the deviation in the core diameter.

Figure 12 is a schematic diagram showing a state in which a glass-particle-deposited body for forming a single-mode optical fiber is produced by the VAD method.

Figures 13A to 13C are examples of the refractive-index profile.

## DETAILED DESCRIPTION OF THE INVENTION

The present inventor studied the reason why conventional methods failed to stably produce a high-quality glass-particle-deposited body by depositing glass particles in an intended state. The study revealed that the reason is the discrepancy between the direction of the issuing glass-material gas and that of the flame during the production of the glass-particle-deposited body.

This discrepancy is caused by the deviation of the position of the material-gas-feeding pipe from the designed configuration. When the glass-particle-synthesizing burner is mounted, the material-gas-feeding pipe placed at the center of the burner, particularly the tip portion of the pipe, bends. For example, the tip portion of the material-gas-feeding pipe sometimes bends downward due to its own weight. Conversely, the tip portion of the material-gas-feeding pipe is sometimes displaced upward due to a downward load applied to the bottom-end portion of the pipe. The downward load is caused by the weights of a gas-feeding hose, a connector, and a heater for heating the glass-material gas, for example. The downward load moves the tip portion in the opposite direction.

On the other hand, the bottom-end portion of the material-gas-feeding pipe bends downward due to its own weight and the foregoing downward load. This downward bending causes eddies in the stream of the material gas flowing in the material-gas-feeding pipe. The eddies cause the material gas to be unstable in the chemical reaction for synthesizing glass particles.

In addition, a burner having an easily bending material-gas-feeding pipe, which forms the center port, lacks stability against external disturbances. Consequently, the pipe tends to change its position with time, unstabilizing the chemical reaction for the synthesis of the glass particles. As a result, it becomes difficult to stably deposit the glass particles in an intended state, increasing variations in the diameter and refractive index of the core of the optical fiber and thus degrading the quality of the optical fiber. In addition, the bending of the bottom-end portion may develop cracks in the material-gas-feeding pipe. A burner suffering the cracks must be replaced immediately to avoid possible problems such as gas leakage.

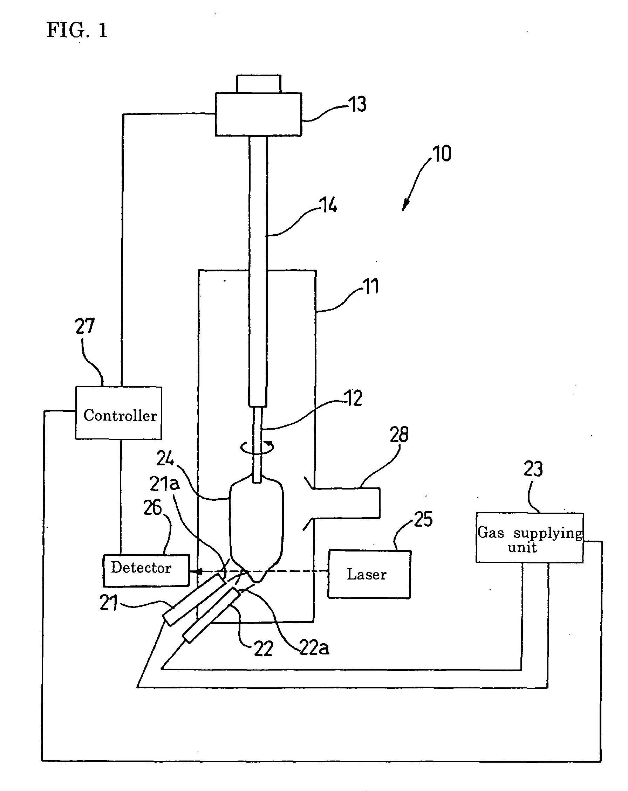

The method of producing a glass-particle-deposited body and the glass-particle-synthesizing burner of the present invention are explained below by referring to the drawing in the case of the VAD method as an example. Figure 1 is a schematic diagram showing an apparatus for producing a glass-particle-deposited body. The apparatus is to be used in an embodiment of the present invention. An apparatus 10 for producing a glass-particle-deposited body comprises a reaction container 11. The reaction container 11 is provided with a suspending rod 14, which is suspended by a lifter 13 placed above the reaction container 11 and which is inserted into the reaction container 11 from its top. The suspending rod 14 suspends a starting member 12. The lifter 13 moves up and down the starting member 12 and rotates it on its own axis together with the suspending rod 14.

The reaction container 11 is provided in it with a cladding-synthesizing burner 21 and a core-synthesizing burner 22, both of which blow glass particles onto the starting member 12. The burners 21 and 22 are mounted in a slanting position facing upward so that their tips 21a and 22a can face the starting member 12. The burners 21 and 22 are connected to a gas-supplying unit 23, which supplies a glass-material gas, a combustible gas, a combustion-assisting gas, and a sealing gas to the burners. The burners 21 and 22 eject these gases to synthesize glass particles. The glass particles are gradually deposited onto the end portion of the starting member 12, forming a glass-particle-deposited body 24.

The reaction container 11 is provided in the vicinity of its lower end with a laser 25 and a detector 26 placed at a position opposite to the laser 25 in terms of the reaction container 11. The laser 25 radiates a laser beam to the lower end portion of the glass-particle-deposited body 24. The detector 26 receives the radiated laser beam. The detector 26 outputs the received signal to a controller 27 for controlling the formation of the glass-particle-deposited body. The controller 27 controls the lifter 13 and the gas-supplying unit 23 so that the output of the received signal can be maintained constant. This operation controls the density and growing rate of the glass-particle-deposited body 24 being formed. The reaction container 11 is also provided with an exhaust pipe 28.

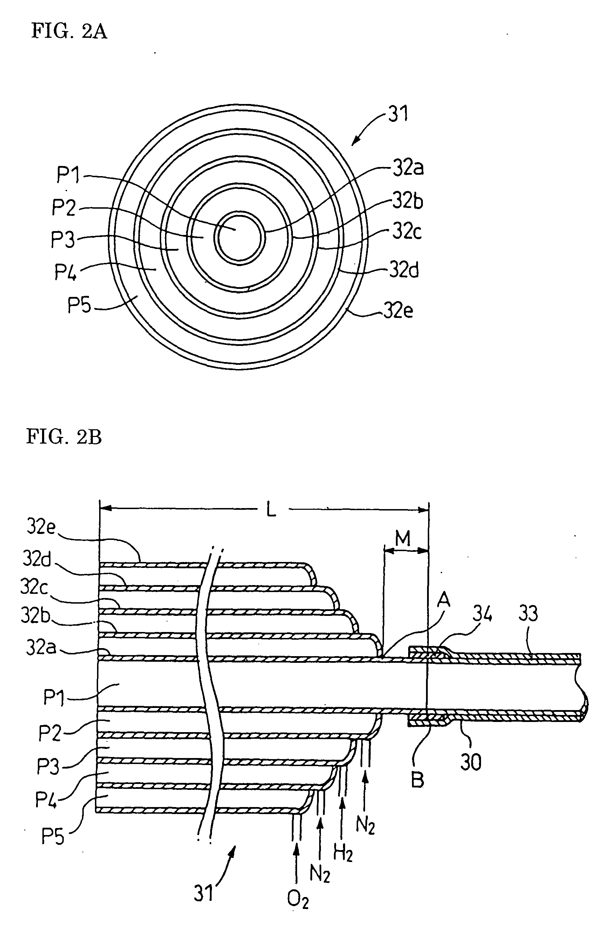

The first embodiment of the glass-particle-synthesizing burner of the present invention is explained below. The burner can be used as the cladding-synthesizing burner 21 and the core-synthesizing burner 22. Figures 2A and 2B are schematic diagrams showing the first embodiment of the glass-particle-synthesizing burner of the present invention, in which Fig. 2A is a front view and Fig. 2B is a cross-sectional view including the center axis of the burner.

According to the first embodiment of the present invention, a glass-particle-synthesizing burner 31 comprises a plurality of concentrically placed cylindrical pipes 32a, 32b, 32c, 32d, and 32e having different diameters. The inside space of the central pipe 32a forms a port P1 for ejecting a glass-material gas. The clearances between neighboring two pipes of the pipes 32a, 32b, 32c, 32d, and 32e form ports P2, P3, P4, and P4, respectively, in this order from the inside.

The pipes constituting the burner 31 are made of silica glass. The bottom ends of the pipes 32b, 32c, 32d, and 32e are welded to the external peripheries in the vicinity of the bottom ends of the internally neighboring pipes 32a, 32b, 32c, and 32d, respectively. Thus, all the pipes are fixed to one another to form a consolidated body. The material-gas-feeding pipe 32a is supported from the outside at a supporting point A in the vicinity of the bottom end. At the supporting point A, the pipe 32a is linked with the neighboring pipe 32b. The distance *M* between the bottom end *B* of the pipe 32a and the supporting point A is designed to fall within the range of 10 to 200 mm, for example.

A material-gas-feeding hose 33 is connected to the bottom end of the material-gas-feeding pipe 32a through a connector 34. The material-gas-feeding hose 33 is provided with a heater 30 such that the heater covers the portion in the vicinity of the connecting portion with the material-gas-feeding pipe 32a together with the connector 34. The material-gas-feeding hose 33 is supplied with a glass-material gas from the gas-supplying unit 23. The glass-material gas is fed into the port P1 in a gasified state. In the case of the cladding-synthesizing burner 21, $SiCl_4$ is introduced as the glass-material gas, and in the case of the core-synthesizing burner 22, $SiCl_4$ and $GeCl_4$ are introduced as the glass-material gas. Oxygen ($O_2$) may be introduced into the port P1 together with the glass-material gas.

A gas-feeding tube is connected to the bottom-end portion of each of the other pipes 32b, 32c, 32d, and 32e. The gas-supplying unit 23 supplies nitrogen ($N_2$) into the ports P2 and P4, hydrogen ($H_2$) into the port P3, and oxygen ($O_2$) into the port P5. In this case, $H_2$ is a combustible gas, $O_2$ is a combustion-assisting gas, and $N_2$ is a sealing gas. The combustible gas and the combustion-assisting gas constitute a combustion gas. The burner 31 having the above-described structure is held at its periphery by a holder (not shown) to be mounted on a supporting stand (not shown). The burner 31 is mounted in a slanting position facing the starting member 12.

The glass-particle-synthesizing burner 31 satisfies the following relationship:

$$1{,}975 \leq L^4/D^2 \leq 1.15 \times 10^9 \tag{1},$$

where *L* is the length of the material-gas-feeding pipe 32a, and
D is the cross-sectional area of the pipe 32a.

Here, the length L is the total length between the tip from which the glass-material gas is ejected and the bottom end *B* fitted into the connector 34 as shown in Fig. 2B.

The glass-particle-synthesizing burner 31 also satisfies the following relationship:

$$1 \leq M^4/D^2 \leq 3.81 \times 10^4 \tag{2},$$

where *M* is the distance between the supporting point A and the bottom end *B* of the material-gas-feeding pipe 32a, and
*D* is the cross-sectional area of the pipe 32a.

In the present invention, the glass-particle-synthesizing burner 31 has at its center a material-gas-feeding pipe for ejecting a glass-material gas. The burner 31 is used as the cladding-synthesizing burner 21 and the core-synthesizing burner 22 to synthesize glass particles. The glass particles are deposited onto the starting member to form the glass-particle-deposited body 24. While the burner synthesizes the glass particles to deposit them, the magnitude of bending at the tip of the material-gas-feeding pipe 32a is maintained at a value of at most 1.2 mm, and the magnitude of bending at its bottom end is maintained at a value of at most 0.3 mm. It is desirable that the burners 21 and 22 be mounted at a slanting angle of 5 to 85 degrees against the vertical line in the case of the VAD method and at a slanting angle of 60 to 120 degrees against the vertical line in the case of the OVD method.

The cladding-synthesizing burner 21 and the core-synthesizing burner 22 are each designed to have the following relationship:

$$0 \text{ kgf/mm}^2 \leq W/D \leq 2.0 \text{ kgf/mm}^2 \qquad (3),$$

where $W$ is a load applied to the bottom-end portion of the material-gas-feeding pipe 32a; and
    $D$ is the cross-sectional area of the pipe 32a.

It is more desirable that the above relationship be

$$0 \text{ kgf/mm}^2 \leq W/D \leq 0.36 \text{ kgf/mm}^2 \qquad (4).$$

To obtain the above-described relationship, it is recommended to adjust the weights of the material-gas-feeding hose 33, the heater 30, and the connector 34 in accordance with the cross-sectional area $D$, for example. Conversely, a burner having the material-gas-feeding pipe 32a with a proper cross-sectional area $D$ may be used according to the weight of the hose 33, the heater 30, and the connector 34. Alternatively, the load $W$ may be reduced for the adjustment by either suspending any of the hose 33, the heater 30, and the connector 34 from above with string or supporting any of them from below with a supporting member. Yet alternatively, the material-gas-feeding hose 33 may be provided with a relaying portion to support the hose there so that the load due to the hose can be reduced.

When formula (3) is satisfied, the discrepancy between the direction of the issuing glass-material gas and that of the flame is minimized. As a result, after the vitrification of the glass-particle-deposited body 24, the refractive-index profile is free from a local maximum portion (outstanding portion) and a gradual slope at the interface between the core and the cladding. In other words, a high-quality glass-particle-deposited body 24 can be easily produced.

When formula (4) is satisfied, the bending occurring at the bottom-end portion of the material-gas-feeding pipe 32a can also be suppressed. As a result, the material gas in the material-gas-feeding pipe 32a can flow smoothly without shedding eddies. Consequently, the material gas can perform chemical reaction stably to synthesize glass particles. The glass-particle-deposited body thus formed can produce an optical fiber preform having minimized variations in glass diameter and refractive index both between production lots and within the same lot. Finally, an optical fiber is produced with high precision. In addition, the load applied to the portion such as the connector portion between the material-gas-feeding pipe and the tube at the upper-stream side can be reduced. This reduction can suppress the damage such as the crack development in the material-gas-feeding pipe due to the foregoing load. Consequently, the burner increases its life span and can easily produce a high-quality glass-particle-deposited body 24 stably over a prolonged period.

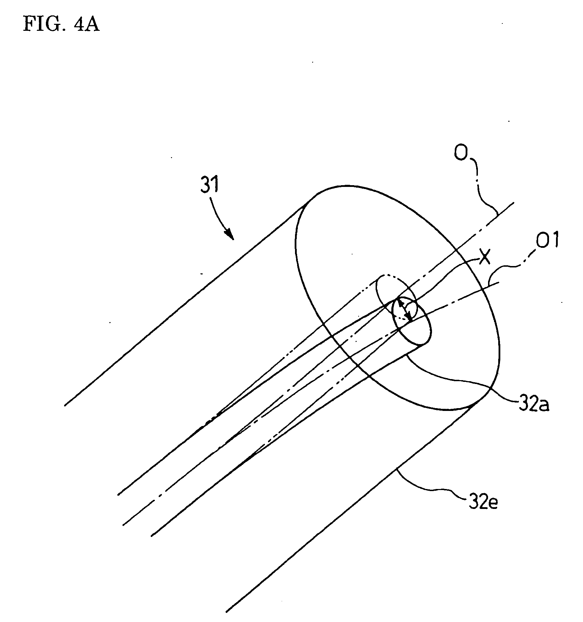

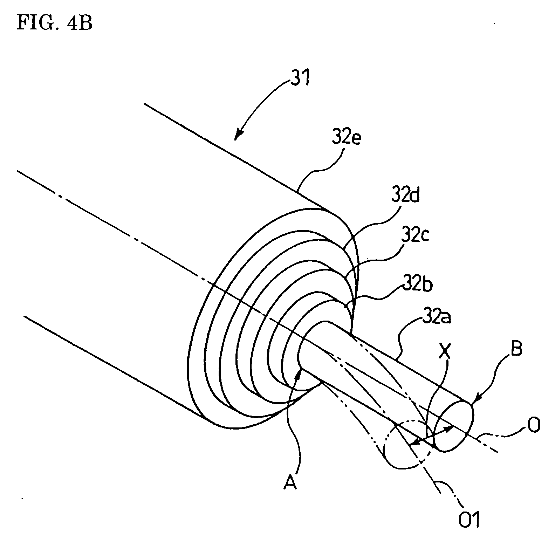

Figure 4A is a schematic diagram explaining the "magnitude of bending" of the material-gas-feeding pipe by using the tip portion of the burner as an example, and Fig. 4B is a schematic diagram explaining it by using the bottom-end portion of the burner as another example. The term "magnitude of bending" used in this specification is defined as the magnitude of displacement $X$ of individual points on the center axis $O1$ of the material-gas-feeding pipe 32a from the reference axis (center axis when the pipe is straight) $O$ of the material-gas-feeding pipe 32a. The reference axis $O$ is obtained by placing the burner (the pipe 32e) in a vertical position. The magnitude of bending $X$ at the tip of the burner is measured by the following method. First, the main body of the burner 31 is placed such that the outermost pipe 32e becomes vertical. Second, the position of the reference axis $O$ at the tip of the burner is measured as the distance from the outermost pipe 32e. Then, the main body of the burner 31 for synthesizing glass particles is slanted. The material-gas-feeding hose 33, the heater 30, and the connector 34 are connected to the material-gas-feeding pipe 32a. This operation bends the material-gas-feeding pipe 32a. The linear distance at the tip produced by the displacement of the center axis $O1$ from the reference axis $O$ is measured as the magnitude of bending $X$ at the tip. The magnitude of bending at other points than the tip is measured similarly.

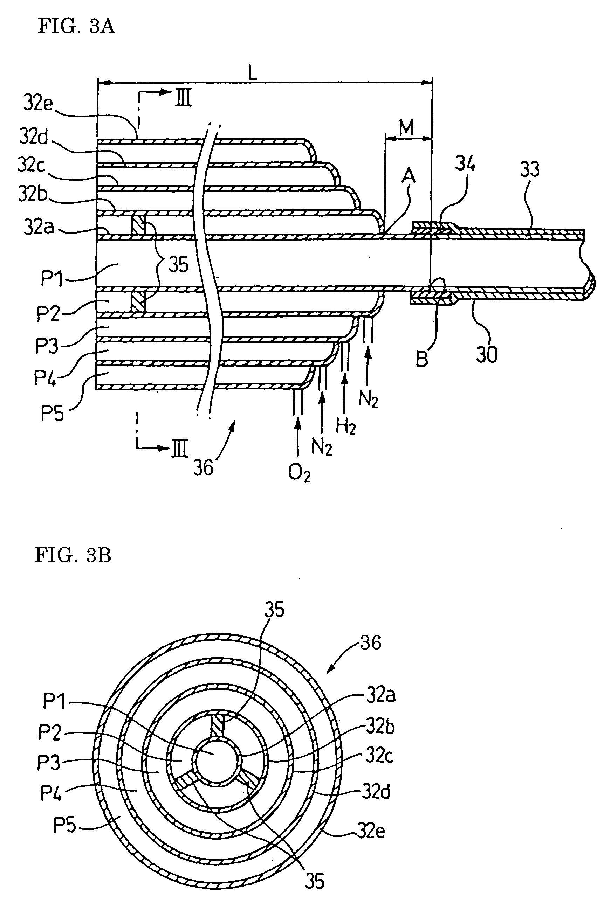

Next, the second embodiment of the glass-particle-synthesizing burner of the present invention is explained below. Figures 3A and 3B are schematic diagrams showing the second embodiment of the glass-particle-synthesizing burner of the present invention, in which Fig. 3A is a cross-sectional view including the center axis of the burner and Fig. 3B is a cross-sectional view at the III - III section in Fig. 3A. Explanations for the elements common to those in the first embodiment are omitted.

A burner 36 for producing a glass-particle-deposited body comprises:

    (a) a material-gas-feeding pipe 32a for ejecting a glass-material gas; and
    (b) a plurality of gas-feeding pipes 32b to 32e for feeding a plurality of gases needed to form a flame for combusting the glass-material gas.

The material-gas-feeding pipe 32a is linked with the pipe 32b in the vicinity of the tip of the burner 36 with three linking members 35, which are attached at intervals of about 120 degrees on the periphery of the pipe. Thus, the pipe 32a and the pipe 32b are mutually linked at the two longitudinal locations, one is the location of the linking members 35 and the other in the vicinity of the bottom end, to strengthen the consolidation. The linking members 35 maintain the relative position between the material-gas-feeding pipe 32a and the pipe 32b. This structure prevents the upward displacement of the material-gas-feeding pipe 32a due to the load applied to the bottom-end portion. This structure also prevents the material-gas-feeding pipe 32a from bending due to its own weight between the supporting point and the tip.

The glass-particle-synthesizing burner 36 is used as the cladding-synthesizing burner 21 and the core-synthesizing burner 22 to synthesize glass particles. The glass particles are deposited onto a starting member to produce the glass-particle-deposited body 24. While the burner synthesizes the glass particles to deposit them, the magnitudes of bending at individual points of the material-gas-feeding pipe 32a are maintained at a value of at most 1.2 mm.

The maintenance of the magnitude of bending in the material-gas-feeding pipe 32a at a value of at most 1.2 mm enables the suppression of the deviation in the relative refractive-index difference to at most 0.005% against the intended relative refractive-index difference of 0.35% and the deviation in the core diameter to at most 0.06 mm against the intended core diameter of 20 mm.

In addition, in the cladding-synthesizing burner 21 and the core-synthesizing burner 22, the discrepancy between the direction of the issuing glass-material gas and that of the flame can be minimized. As a result, after the vitrification of the glass-particle-deposited body 24, the refractive-index profile is free from an outstanding portion and a gradual slope at the interface between the core and the cladding. In other words, a high-quality glass-particle-deposited body 24 can be easily produced.

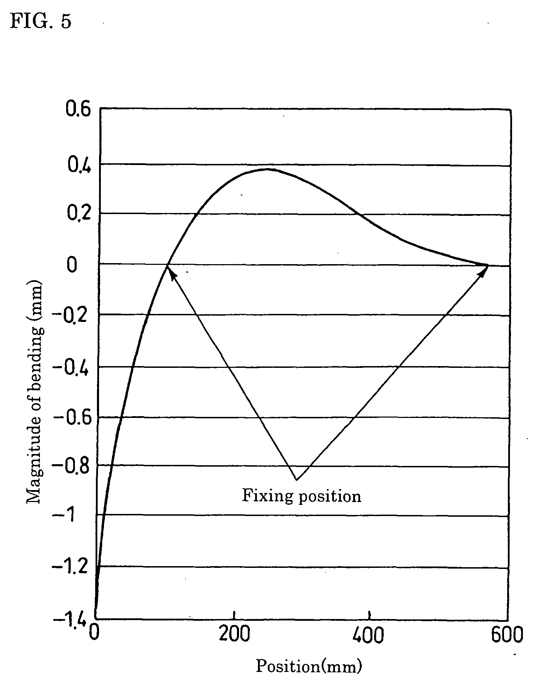

Figure 5 is a graph showing the magnitude of bending at individual positions in the material-gas-feeding pipe 32a when the pipe 32a is fixed at two longitudinal locations; one location is the tip of the pipe 32a and the other is 100 mm away from the bottom end of the pipe 32a. As can be seen from Fig. 5, the magnitude of bending at the fixing position is 0 mm, and positions away from the fixing position show a bending of a certain magnitude.

The magnitude of bending at individual positions in the material-gas-feeding pipe 32a is determined by (a) the downward (gravitational direction) bending due to the self weight and (b) the upward displacement of the tip portion due to the load applied to the bottom-end portion of the burner 36. Even when the material-gas-feeding pipe 32a is fixed at two longitudinal locations, under a certain condition, the pipe 32a may suffer bending, slanting the axis of the port P1. In this case, the material gas may issue in a slanting direction, failing to accomplish the intended effect.

In view of the above-described point, it is desirable that among the pipes that are linked with one another at a plurality of longitudinal locations (the material-gas-feeding pipe 32a and the pipe 32b in the case of Fig. 3B), the pipe having the maximum cross-sectional area have a cross-sectional area of at least 30 mm$^2$. In addition, it is desirable that among the material-gas-feeding pipe 32a and the gas-feeding pipes 32b to 32e, a pipe placed at the outer side have a cross-sectional area larger than that of a pipe placed at the inner side. This structure can further reduce the magnitude of bending in pipes linked with one another.

Either of the cladding-synthesizing burner and the core-synthesizing burner may have the structure in which the material-gas-feeding pipe 32a of the burners 31 and 36 has a magnitude of bending of at most 1.2 mm at the tip, a magnitude of bending of at most 0.3 mm at the bottom end, or both. It is more desirable that both of the burners have the above-described structure. When the present invention is applied only to the core-synthesizing burner, the diameter and refractive index of the core can be controlled to the intended value. Similarly, when the present invention is applied only to the cladding-synthesizing burner, the diameter of the cladding can be controlled to the intended value.

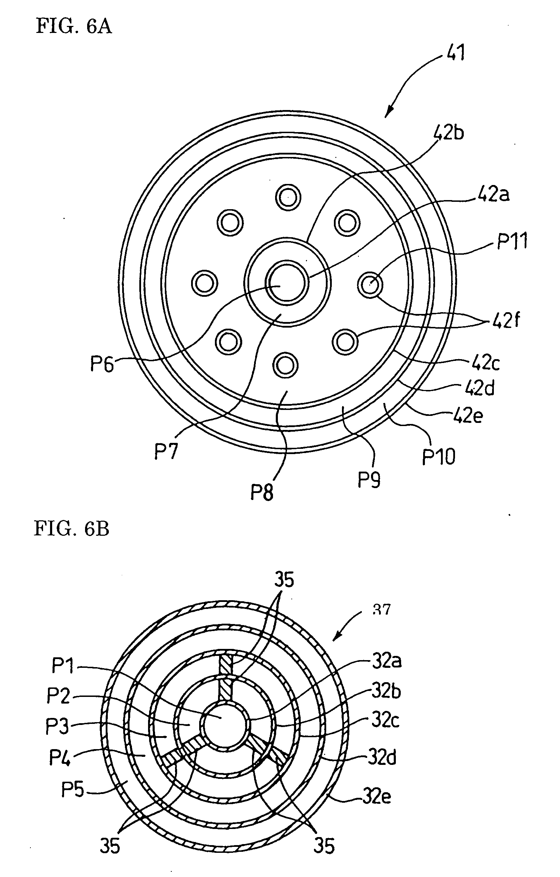

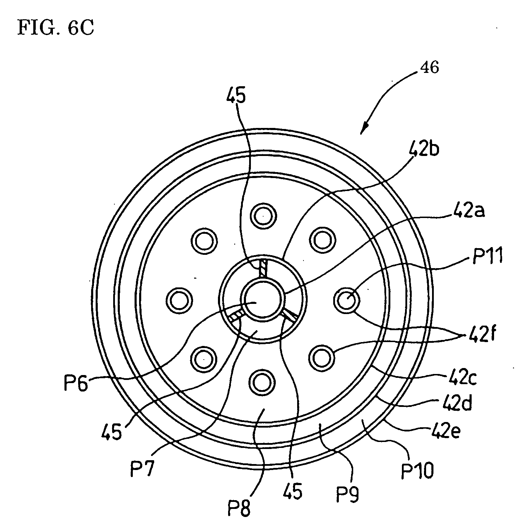

In the glass-particle-synthesizing burner of the present invention, its cross section is not limited to a circle. A rectangular cross section may be used. Furthermore, in the multiple-pipe structure, the number of pipes has no limitation. What is more, although the above explanation is made by referring to the burners 31 and 36 having the multiple concentric circular-pipe the burners 31 and 36 having the multiple concentric circular-pipe structure as examples, the glass-particle-synthesizing burner of the present invention is not limited to the multiple concentric-pipe structure providing that the burner has a material-gas-feeding pipe at its center. For example, a burner 41 shown in Fig. 6A and a burner 46 shown in Fig. 6C have a plurality of combustion-gas-feeding pipes 42f, which eject a combustion gas, arranged on a virtual circle surrounding the material-gas-feeding pipe 42a. In this case, the pipes 42f are placed in a slanting position toward the center axis of the burner 41 (or the burner 46) such that their gas-ejecting directions converge at the same point on the virtual line extended from the center axis of the burner 41 (or the burner 46).

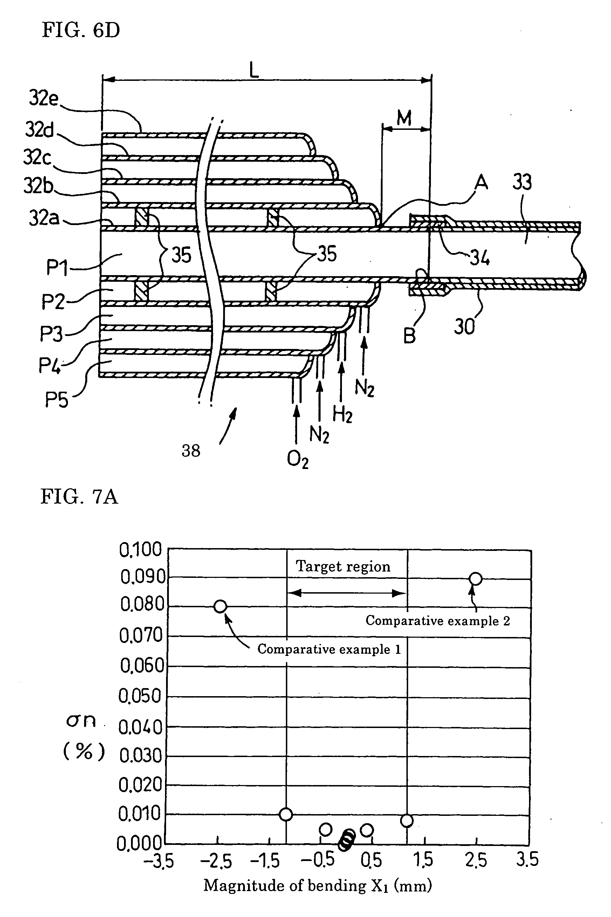

In addition, as in a glass-particle-synthesizing burner 37 shown in Fig. 6B, in addition to the linking between the material-gas-feeding pipe 32a and the pipe 32b, other neighboring pipes, for example, the pipes 32b and 32c, may be mutually linked with linking members 35. Similarly, the pipes 32c and 32d, and the pipes 32d and 32e also, may also be mutually linked with linking members 35. As in a glass-particle-synthesizing burner 38 shown in Fig. 6D, linking members 35 may be provided at two longitudinal locations.

The above embodiments are explained by using an example in which a glass-particle-deposited body 24 is produced by the VAD method. These embodiments, however, can also be implemented by the OVD method, in which glass particles are deposited over a glass rod, which is used either as a starting member or as a member to become the core, by relatively moving the glass rod and a burner. In this case, a plurality of burners may be placed along the axis of the glass rod to deposit glass particles at a plurality of places on the glass rod simultaneously.

EXAMPLES 1 TO 10 AND COMPARATIVE EXAMPLES 1 AND 2

The apparatus 10 for producing a glass-particle-deposited body shown in Fig. 1 is used to produce a glass-particle-deposited body 24. The starting member used is made of pure silica glass and had a diameter of 25 mm and a length of 400 mm.

The core-synthesizing burner 22 used is a silica-glass burner having a multiple-pipe structure shown in Figs. 2A and 2B. The burner has a material-gas-feeding pipe 32a in which the distance $M$ between the bottom end $B$ and the supporting point $A$ is 40 mm. The cladding-synthesizing burner 21 and the core-synthesizing burner 22 are placed such that their reference axes have angles of 45 and 50 degrees, respectively, against the vertical line. The cladding-synthesizing burner 21 is fed with $SiCl_4$ and $O_2$, and the core-synthesizing burner 22 is fed with $SiCl_4$, $GeCl_4$, and $O_2$.

In Examples 1 to 4 and Comparative example 1, the connector 34 is suspended with string so that the load $W$ applied to the material-gas-feeding pipe 32a of the core-synthesizing burner 22 becomes 2.2 kgf. Under this condition, glass-particle-deposited bodies 24 are produced by varying the length $L$ and the cross-sectional area $D$ of the material-gas-feeding pipe 32a. In Examples 5 to 8 and Comparative example 2, the length $L$ of the material-gas-feeding pipe 32a is fixed at 300 mm. Under this condition, glass-particle-deposited bodies 24 are produced by varying the cross-sectional area $D$ and the load $W$. In Examples 9 and 10, the bending at the tip portion of the pipe due to its own weight is canceled out by applying a load to the bottom-end portion. Under this condition, glass-particle-deposited bodies 24 are produced.

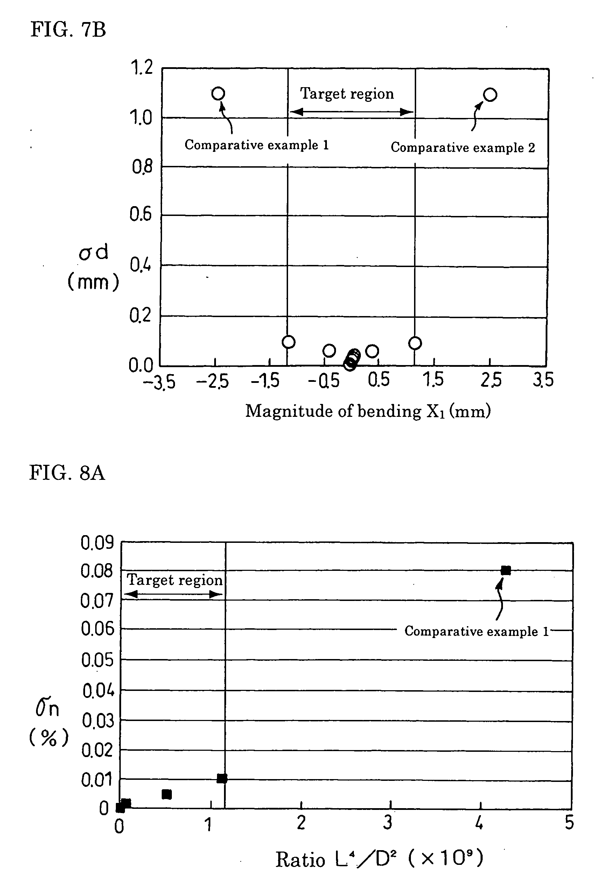

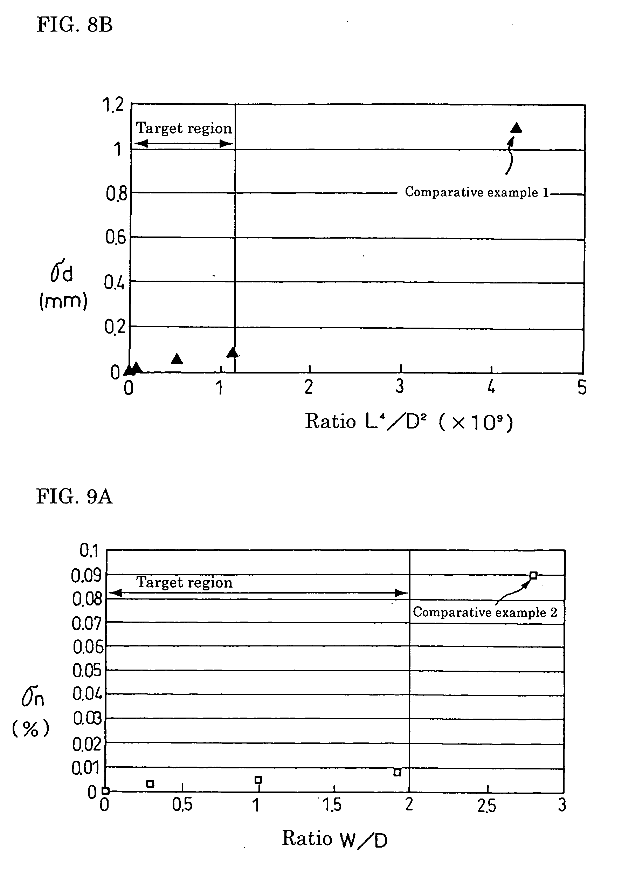

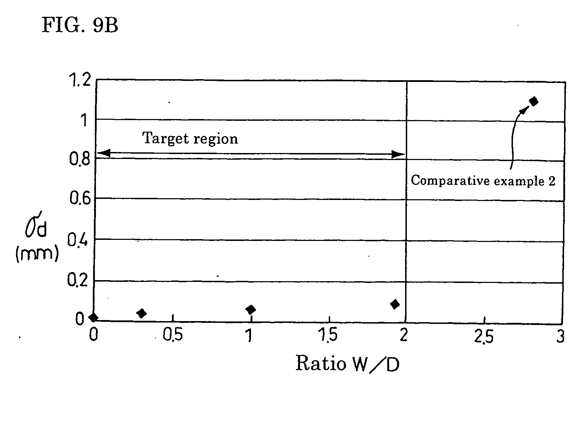

Subsequently, the glass-particle-deposited body 24 is heated to vitrify it, so that an optical fiber preform is produced. Its core diameter and relative refractive-index difference are measured. Figure 7A is a graph showing a relationship between the magnitude of bending $X_1$ at the tip and the deviation $\sigma_n$ in the relative refractive-index difference (%) of the core in Examples 1 to 8 and Comparative examples 1 and 2, and Fig. 7B is a graph showing a relationship between the magnitude of bending $X_1$ at the tip and the deviation $\sigma_d$ in the core diameter in Examples 1 to 8 and Comparative examples 1 and 2. The sign of the magnitude of bending $X$ indicates the direction of the bending; the negative sign indicates a downward bending and no sign indicates an upward bending. Figure 8A is a graph showing a relationship between the ratio $L^4/D^2$ and the deviation $\sigma_n$ in the relative refractive-index difference of the core in Examples 1 to 4 and Comparative example 1, and Fig. 8B is a graph showing a relationship between the ratio $L^4/D^2$ and the deviation $\sigma_d$ in the core diameter in Examples 1 to 4 and Comparative example 1. Figure 9A is a graph showing a relationship between the ratio $W/D$ and the deviation $\sigma_n$ in the relative refractive-index difference of the core in Examples 5 to 8 and Comparative example 2, and Fig. 9B is a graph showing a relationship between the ratio $W/D$ and the deviation $\sigma_d$ in the core diameter in Examples 5 to 8 and Comparative example 2. The quality of the optical fiber preform is judged by the following criteria. When the deviation $\sigma_n$ in the relative refractive-index difference of the core was 0.01% or less against the intended value of 0.35%, it is judged to be satisfactory. When the deviation $\sigma_d$ in the core diameter is 0.1 mm or less against the intended value of 20 mm, it is judged to be satisfactory. When the relative refractive-index difference of the core and the core diameter satisfy these criteria, the obtained optical fiber transmission property is stabilized. Table I summarizes the results obtained in Examples 1 to 10 and Comparative examples 1 and 2.

Table I

| | Length $L$ | Cross-sectional area $D$ | Load $W$ | Ratio $W/D$ | Ratio $L^4/D^2$ | Magnitude of bending bending $X_1$ | Deviation $\sigma_n$ | Deviation $\sigma_d$ |
|---|---|---|---|---|---|---|---|---|
| Example 1 | 500 | 11 | 2.2 | 0.2000 | $5.17 \times 10^8$ | -0.39 | 0.005 | 0.06 |
| Example | 100 | 225 | 2.2 | 0.0098 | $1.98 \times 10^3$ | 0.00 | 0.000 | 0.01 |
| Example 3 | 660 | 13 | 2.2 | 0.1692 | $1.12 \times 10^9$ | -1.16 | 0.010 | 0.10 |
| Example 4 | 300 | 10 | 2.2 | 0.2200 | $8.10 \times 10^7$ | 0.03 | 0.002 | 0.03 |
| Comparative example 1 | 700 | 7.5 | 2.2 | 0.2933 | $4.27 \times 10^9$ | -2.50 | 0.080 | 1.10 |

Table I   (continued)

| | Length $L$ | Cross-sectional area $D$ | Load $W$ | Ratio $W/D$ | Ratio $L^4/D^2$ | Magnitude of bending bending $X_1$ | Deviation $\sigma_n$ | Deviation $\sigma_d$ |
|---|---|---|---|---|---|---|---|---|
| Example 5 | 300 | 100 | 0 | 0.0000 | $8.10 \times 10^5$ | -0.01 | 0.000 | 0.02 |
| Example 6 | 300 | 10 | 3 | 0.3000 | $8.10 \times 10^7$ | 0.07 | 0.003 | 0.04 |
| Example 7 | 300 | 10 | 10 | 1.0000 | $8.10 \times 10^7$ | 0.39 | 0.005 | 0.06 |
| Example 8 | 300 | 7 | 13.5 5 | 1.9286 | $1.65 \times 10^8$ | 1.17 | 0.008 | 0.09 |
| Comparative example 2 | 300 | 5 | 14 | 2.8000 | $3.24 \times 10^8$ | 2.44 | 0.090 | 1.10 |
| Example example 9 | 700 | 4 | 14 | 3.5000 | $1.50 \times 10^{10}$ | -1.01 | 0.009 | 0.09 |
| Example 10 | 450 | 7 | 15 | 2.1400 | $8.40 \times 10^8$ | 0.92 | 0.009 | 0.08 |

Examples 9 and 10 reveal that when a glass-particle-deposited body is produced by maintaining the magnitude of bending $X_1$ at the tip of the material-gas-feeding pipe at a value of at most 1.2 mm, an optical fiber preform can be produced which satisfies both the above-described criteria of the deviation $\sigma_n$ in relative refractive-index difference and the deviation $\sigma_d$ in core diameter.

As can be seen from Table I and Fig. 8A, whereas Examples 1 to 4 satisfy the required value of the deviation $\sigma_n$ in relative refractive-index difference (0.01% or less), Comparative example 1 fails to meet the requirement by showing an exceedingly large deviation. Similarly, as can be seen from Table I and Fig. 8B, whereas Examples 1 to 4 satisfy the required value of the deviation $\sigma_d$ in core diameter (0.1 mm or less), Comparative example 1 fails to meet the requirement by showing an exceedingly large deviation. As for the magnitude of bending $X_1$ at the tip, as can be seen from Table I and Figs. 7A and 7B, whereas Examples 1 to 4 show a value of less than 1.2 mm in absolute value, Comparative example 1 show a value of 2.50 mm in absolute value. As can be seen from Table I and Figs. 8A and 8B, among Examples 1 to 4 and Comparative example 1, all of which are subjected to the load $W$ of 2.2 kgf, only Examples 1 to 4 show the ratio $L^4/D^2$ that satisfies the formula $1,975 \leq L^4/D^2 \leq 1.15 \times 10^9$. In the case of Comparative example 1, observation of the refractive-index profile reveals that there exists a local maximum portion in the refractive index at the interface between the core and the cladding.

As can be seen from Table I and Fig. 9A, whereas Examples 5 to 8 satisfy the required value of the deviation $\sigma_n$ in relative refractive-index difference (0.01% or less), Comparative example 2 fails to meet the requirement by showing an exceedingly large deviation. Similarly, as can be seen from Table I and Fig. 9B, whereas Examples 5 to 8 satisfy the required value of the deviation $\sigma_d$ in core diameter (0.1 mm or less), Comparative example 2 fails to meet the requirement by showing an exceedingly large deviation. As for the magnitude of bending $X_1$ at the tip, as can be seen from Table I and Figs. 7A and 7B, whereas Examples 5 to 8 show a value of less than 1.2 mm in absolute value, Comparative example 2 shows a value of 2.44 mm or so in absolute value. As can be seen from Table I and Figs. 9A and 9B, among Examples 5 to 8 and Comparative example 2, all of which have the length $L$ of 300 mm, only Examples 5 to 8 show the ratio $W/D$ that satisfies the formula $0\ kgf/mm^2 \leq W/D \leq 2.0\ kgf/mm^2$. In the case of Comparative example 2, observation of the refractive-index profile reveals that there exists a gradual slope of refractive index at the interface between the core and the cladding.

As described above, to suppress deviations in relative refractive-index difference and core diameter to a small value, it is effective to maintain the magnitude of bending at the tip of the material-gas-feeding pipe at a value of at most 1.2 mm, more desirably at most 0.4 mm. As can be seen from Table I and Figs. 7A and 7B, when the absolute value of the magnitude of bending $X_1$ at the tip was at most 0.4 mm, the deviation $\sigma_n$ in relative refractive-index difference and the deviation $\sigma_d$ in core diameter show a value considerably smaller than the required value, which is more desirable. To suppress deviations in relative refractive-index difference and core diameter to a small value, it is also desirable that the relationship between the cross-sectional area $D$ and length $L$ of the material-gas-feeding pipe satisfy the formula $1,975 \leq L^4/D^2 \leq 1.15 \times 10^9$, more desirably $1,975 \leq L^4/D^2 \leq 5.2 \times 10^8$. Similarly, it is also desirable that the relationship between the cross-sectional area D of the material-gas-feeding pipe and the load $W$ applied to the bottom-end portion of the material-gas-feeding pipe satisfy the formula $0 \text{ kgf/mm}^2 \le W/D \le 2.0 \text{ kgf/mm}^2$, more desirably $0 \text{ kgf/mm}^2 \le W/D \le 1 \text{ kgf/mm}^2$. In the above-described Examples, the magnitude of bending at the tip of the material-gas-feeding pipe was limited. In addition, it is also desirable to suppress the magnitude of bending at the tip of other gas-feeding pipes to at most 1.2 mm.

EXAMPLES 11 TO 18 AND COMPARATIVE EXAMPLES 3 AND 4

The core-synthesizing burner 22 used is a silica-glass burner having a multiple-pipe structure shown in Figs. 2A and 2B. The burner has a material-gas-feeding pipe 32a in which the distance $M$ between the bottom end $B$ and the supporting point $A$ is 40 mm, the cross-sectional area $D$ is $10 \text{ mm}^2$ (inner diameter: 3.5 mm, outer diameter: 5 mm). The core-synthesizing burner 22 is placed such that its reference axis has an angle of 45 degrees against the vertical line. Individual ports of the burner are connected with tubes for introducing various types of gases. The total load applied to the material-gas-feeding pipe is controlled to 2.4 kgf. The material-gas-feeding pipe of the cladding-synthesizing burner 21 is fed with $SiCl_4$ and $O_2$, and the material-gas-feeding pipe the core-synthesizing burner 22 was fed with $SiCl_4$, $GeCl_4$, and $O_2$.

The produced glass-particle-deposited body is heated to vitrify it, so that an optical fiber preform is obtained. The row headed by "Example 11" in Table II shows the following data on the obtained optical fiber preform and the burner: the deviation $\sigma_n$ in the relative refractive-index difference of the core, the deviation $\sigma_d$ in the core diameter, the number of times of crack development at the bottom end $B$, and the magnitude of bending $X_2$ at the bottom end of the material-gas-feeding pipe.

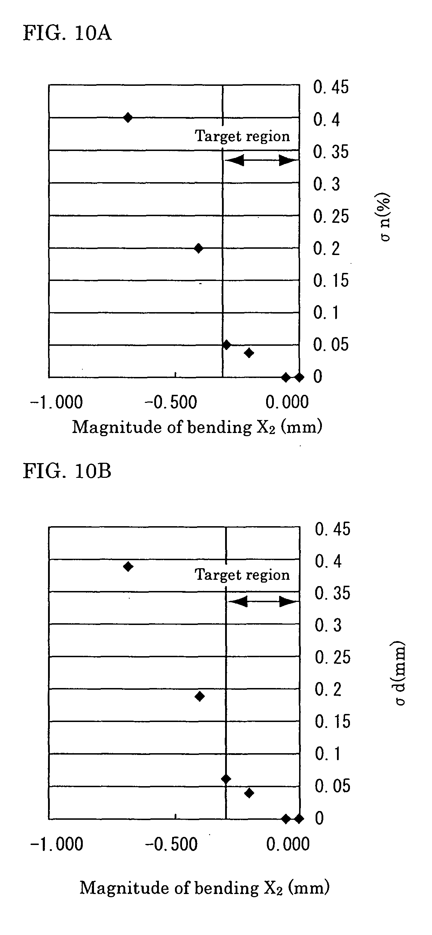

Next, a plurality of burners having different distances $M$, cross-sectional areas $D$, and loads $W$ are prepared. Optical fiber preforms are produced using these burners to measure the deviation in the relative refractive-index difference of the core and the deviation in the core diameter. The rows headed by "Examples 12 to 18 and Comparative examples 3 and 4" in Table II show the following data on the obtained preforms and the burners: the magnitude of bending $X_2$ at the bottom end of the material-gas-feeding pipe, the deviation $\sigma_n$ (%), the deviation $\sigma_d$, and the number of times of crack development at the bottom end B. Figures 10A and 10B also show some of these data.

Table II

| | $M$ | Cross-sectional area $D$ | Load $W$ | Ratio $W/D$ | Ratio $M^4/D^2$ | Suspension | Magnitude of bending $X_2$ | Deviation $\sigma_n$ | Deviation $\sigma_d$ | Number of times of crack development |
|---|---|---|---|---|---|---|---|---|---|---|
| Example 11 | 40 | 10 | 2.4 | 0.2400 | $2.56 \times 10^4$ | None | -0.200 | 0.0040 | 0.040 | 0 |
| Example 12 | 10 | 100 | 2.4 | 0.0240 | $1.00 \times 10^0$ | None | 0.000 | 0.0001 | 0.001 | 0 |
| Com- parative example 3 | 50 | 7.5 | 2.4 | 0.3200 | $1.11 \times 10^5$ | None | -0.695 | 0.0400 | 0.390 | 3 |
| Example 13 | 40 | 8.2 | 2.4 | 0.2927 | $3.81 \times 10^4$ | None | -0.298 | 0.0050 | 0.059 | 1 |
| Example 14 | 40 | 10 | 2.4 | 0.2400 | $2.56 \times 10^4$ | Provided | 0.000 | 0.0001 | 0.001 | 0 |
| Example example 15 | 40 | 100 | 0 | 0.0000 | $2.56 \times 10^2$ | None | 0.000 | 0.0001 | 0.001 | 0 |
| Example 16 | 40 | 10 | 3.6 | 0.3600 | $2.56 \times 10^4$ | None | -0.300 | 0.0050 | 0.060 | 1 |
| Comparative example 4 | 40 | 10 | 5 | 0.5000 | $2.56 \times 10^4$ | None | -0.417 | 0.0200 | 0.190 | 3 |
| Example 17 | 40 | 8.17 | 2.4 | 0.2938 | $3.81 \times 10^4$ | None | -0.300 | 0.0050 | 0.059 | 1 |
| Example 18 | 20 | 8.17 | 3.5 | 0.4284 | $2.40 \times 10^3$ | None | -0.055 | 0.0002 | 0.002 | 1 |

In Table II, the term "Suspension provided" in the row headed by "Example 14" shows that the bottom end $B$ of the material-gas-feeding pipe is suspended with a hook. In Example 14, the amount of the load applied to the hook is measured with a spring balance to adjust the amount of upward movement of the bottom end $B$ so that the measured value of the spring balance can become 2.4 kgf.

As can be seen from Table II, in Examples 11 to 18, it is possible to suppress the absolute value of the magnitude of bending $X_2$ to at most 0.3 mm. On the other hand, in Comparative examples 3 and 4, it exceeded 0.3 mm.

As can be seen from Table II and Fig. 10A, in Examples 11 to 18, in which the magnitude of bending is at most 0.3 mm, the deviation $\sigma_n$ in the relative refractive-index difference of the core is at most 0.0050%. On the other hand, in Comparative examples 3 and 4, in which the magnitude of bending exceeded 0.3 mm, the deviations $\sigma_n$ in the relative refractive-index difference of the core are as large as 0.040% and 0.020%, respectively. Similarly, as can be seen from Table II and Fig. 10B, in Examples 11 to 18, it is possible to suppress the deviation $\sigma_d$ in the core diameter to at most 0.06 mm. On the other hand, in Comparative examples 3 and 4, the deviations $\sigma_d$ in the core diameter are as large as 0.39 mm and 0.19 mm, respectively. In Comparative examples 3 and 4, the burner develops cracks three times at the bottom end B. On the other hand, in Examples, even in Examples 13, 16, and 17, which show a comparatively large magnitude of bending, the crack development is only once. In Examples 11, 12, 14, 15, and 18, no crack develops.

As described above, when the burner is set in such a way that the magnitude of bending $X_2$ at the bottom end $B$ of the material-gas-feeding pipe becomes at most 0.3 mm, more desirably at most 0.2 mm, a good optical fiber preform can be obtained that has the deviation $\sigma_n$ in the relative refractive-index difference of the core as small as at most 0.0050% and the deviation $\sigma_d$ in the core diameter as small as at most 0.06 mm. In addition, when the material-gas-feeding pipe is incorporated into the burner in such a way that the magnitude of bending $X_2$ becomes at most 0.3 mm, the number of times of crack development can be suppressed at the time of the production of a glass-particle-deposited body.

The following is an explanation of the condition for obtaining a material-gas-feeding pipe that can suppress the deviation $\sigma_n$ in the relative refractive-index difference of the core to at most 0.0050% and the deviation $\sigma_d$ in the core diameter to at most 0.06 mm. The condition of a burner that incorporates the pipe is also explained. As can be seen from the comparison of the data obtained in Examples 11 and 16 and Comparative example 4, all of which have the same distance $M$ and cross-sectional area $D$, as the load $W$ increases, the absolute value of the magnitude of bending $X_2$ increases.

Similarly, as can be seen from the comparison of the data obtained in Examples 11, 13, and 17, all of which have the same distance $M$ and load $W$, as the cross-sectional area $D$ increases, not only does the absolute value of the magnitude of bending $X_2$ decrease but also the deviation $\sigma_n$ in the relative refractive-index difference of the core and the deviation $\sigma_d$ in the core diameter decrease. In view of the above-described results, the ratios $W/D$ in Examples and Comparative examples are compared as follows. Whereas Examples 11 to 16 have the ratio $W/D$ of at most 0.36, Comparative example 4 has the ratio $W/D$ of 0.50. Consequently, it is desirable that the ratio $W/D$ be at most 0.36.

On the other hand, although Comparative example 3 has the ratio $W/D$ of less than 0.36, it has an absolute value of 0.695 mm in the magnitude of bending $X_2$. This result is attributable to the fact that the burner in Comparative example 3 has a large value in the distance $M$. In fact, it has the ratio $M^4/D^2$ of $1.11 \times 10^5$. On the other hand, the burners in Examples 11 to 16 have the ratio $M^4/D^2$ of at most $3.81 \times 10^4$. Consequently, it is desirable that the ratio $M^4/D^2$ be at most $3.81 \times 10^4$.

The above-described consideration of the values of the ratios $W/D$ and $M^4/D^2$ provides the following conclusion. When the ratio $W/D$ is at most 0.36 and the ratio $M^4/D^2$ is at most $3.81 \times 10^4$, the burner can incorporate a material-gas-feeding pipe in which the magnitude of bending at the bottom end Bis at most 0.3 mm.

As can be seen from the comparison of the data obtained in Examples 11 and 14, when the bottom end B of the material-gas-feeding pipe is suspended with a hook, the magnitude of bending at the bottom end $B$ can be further suppressed.

As for the number of times of crack development, when the ratio $W/D$ is at most 0.24 and the ratio $M^4/D^2$ is at most $2.56 \times 10^4$, the material-gas-feeding pipe develops no crack at the time of the production of a glass-particle-deposited body. Therefore, this condition is more desirable.

In the above-described Examples, the results are obtained by using a silica burner, which incorporates pipes made of silica. Even when a burner made of different material is used, the importance of the reduction in the magnitude of bending is the same. In other words, even with a burner made of different material, it is understandable that the following statement can be applied. When the material-gas-feeding pipe is incorporated into the burner in such a way that the magnitude of bending $X_2$ at the bottom end $B$ becomes at most 0.3 mm in absolute value, a good optical fiber preform can be obtained that has a small deviation, $\sigma_n$, in the relative refractive-index difference of the core and a small deviation, $\sigma_d$, in the core diameter. In addition, it is also desirable to suppress the magnitude of bending at the bottom end of other gas-feeding pipes to at most 0.3 mm.

EXAMPLES 19 TO 23 AND COMPARATIVE EXAMPLE 5

The core-synthesizing burner used is a burner having a quintuple-pipe structure that comprises:

(a) a material-gas-feeding pipe that has a total length, $L$, of 500 mm and a cross-sectional area, $D$, of 11 mm$^2$ (inner diameter: 3.3 mm, outer diameter: 5 mm) and that is placed at the center; and
(b) a second pipe that is placed at the outside of the periphery of the material-gas-feeding pipe and that has a cross-sectional area, $D$, of 35 mm$^2$ (inner diameter: 10 mm, outer diameter: 12 mm).

A tube for introducing a gas is attached to each pipe of the core-synthesizing burner. The load applied to each pipe is controlled as follow:

The material-gas-feeding pipe: 2.4 kgf
The second pipe: 1.2 kgf
The third to fifth pipes placed at the outside of the periphery of the second pipe in this order: $W_3$ to $W_5$: 0.35 kgf each.

The core-synthesizing burner is placed such that its center axis has an angle of 45 degrees against the surface of the floor.

The material-gas-feeding pipe and the second pipe are mutually linked at two longitudinal locations. At one location at the bottom-end side, the entire periphery of the material-gas-feeding pipe is linked with the second pipe. At the other location at the tip side, the two pipes are linked at three peripheral positions of the inner pipe. The location at the bottom-end side is 50 mm away from the bottom end $B$ toward the tip. The location at the tip side is 80 mm away from the tip of the material-gas-feeding pipe.

The core-synthesizing burner is fed with $GeCl_4$ and $SiCl_4$ as the material gas, and the cladding-synthesizing burner is fed with $SiCl_4$. The synthesized glass particles for the core and glass particles for the cladding are deposited onto the starting member to form a glass-particle-deposited body. The formed glass-particle-deposited body is heated to vitrify it, so that an optical fiber preform is obtained. The row headed by "Example 19" in Table III shows the following data on the obtained optical fiber preform and the burner: the deviation $\sigma_n$ (%) in the relative refractive-index difference of the core, the deviation $\sigma_d$ in the core diameter, and the maximum value $X_{max}$ of the magnitude of bending of the material-gas-feeding pipe.

Next, a plurality of burners are prepared by varying the following features:

(a) the number $N$ of pipes that are linked with one another at a plurality of longitudinal locations;
(b) the maximum cross-sectional area $D_{max}$ among the cross-sectional areas of the pipes linked with one another at a plurality of longitudinal locations.

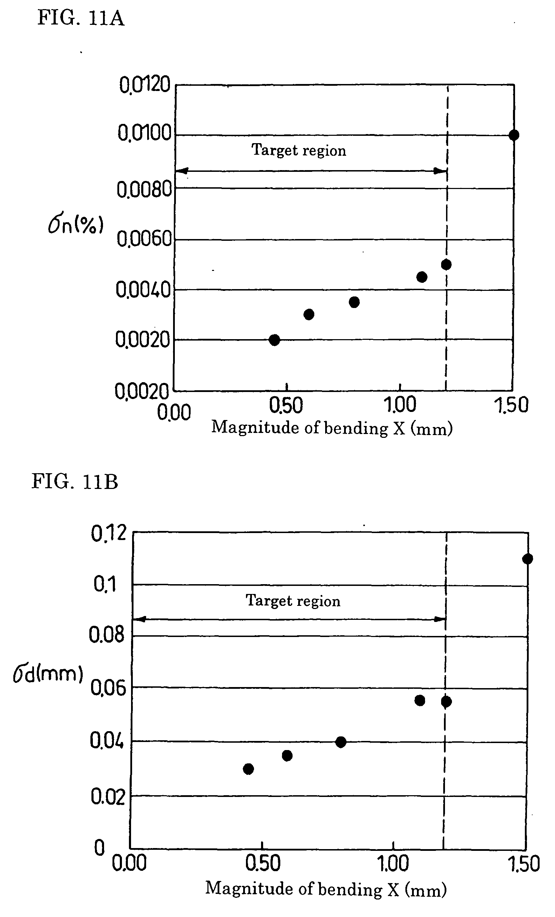

Each burner is subjected to the measurement of the maximum value $X_{max}$ of the magnitude of bending among the magnitudes of bending at individual longitudinal positions in the material-gas-feeding pipe. Each burner is used to form a glass-particle-deposited body. The glass-particle-deposited body is vitrified to produce an optical fiber preform. Obtained results are shown in the rows headed by "Examples 20 to 23 and Comparative example 5" in Table III. Some of the data shown in Table III are plotted in Figs. 11A and 11B. In Table III, the expression "$N= 0$" indicates that the material-gas-feeding pipe is not linked with another pipe except at the bottom-end side. The outermost pipe among the pipes linked with one another is designed to have the value $D_{max}$. When two pipes are mutually linked at two longitudinal locations, one location is at the bottom-end side, and the other location is at the tip side. As described above, the location at the bottom-end side is 50 mm away from the bottom end of the material-gas-feeding pipe toward the tip. The location at the tip side is 80 mm away from the tip of the material-gas-feeding pipe.

Table III

|  | $N$ | $D_{max}$ | $X_{max}$ (mm) | $\sigma_n$(%) | $\sigma_d$ (mm) |
|---|---|---|---|---|---|
| Example 19 | 2 | 35 | 0.80 | 0.0035 | 0.040 |
| Example 20 | 3 | 47 | 0.60 | 0.0030 | 0.035 |
| Example 21 | 4 | 57 | 0.45 | 0.0020 | 0.030 |
| Comparative example 5 | 0 | - | 1.50 | 0.0100 | 0.110 |
| Example 22 | 2 | 30 | 1.10 | 0.0045 | 0.055 |

Table III (continued)

|  | $N$ | $D_{max}$ | $X_{max}$ (mm) | $\sigma_n$(%) | $\sigma_d$ (mm) |
|---|---|---|---|---|---|
| Example 23 | 2 | 11 | 1.20 | 0.0050 | 0.055 |

As can be seen from Table III and Fig. 11A, in any of Examples 19 to 23, which use a burner in which some of the pipes are linked with one another at a plurality of longitudinal locations, the deviation $\sigma_n$ in the relative refractive-index difference was at most 0.0050%. On the other hand, in Comparative example 5, which uses a burner in which no pipes are linked with one another at a plurality of longitudinal locations, the deviation $\sigma_n$ is as large as 0.01%. This result is attributable to the following facts. In Examples 19 to 23, the mutual linking of some of the pipes at a plurality of longitudinal locations suppressed the maximum value of the magnitude of bending to at most 1.2 mm. On the other hand, in Comparative example 5, no mutual linking of pipes at a plurality of longitudinal locations allowed a bending as large as 1.50 mm in the magnitude of bending.

Similarly, as can be seen from Table III and Fig. 11B, in any of Examples 19 to 23, which use a burner in which some of the pipes are linked with one another at a plurality of longitudinal locations, the deviation $\sigma_d$ in the core diameter is at most 0.055 mm. On the other hand, in Comparative example 5, which uses a burner in which no pipes are linked with one another at a plurality of longitudinal locations, the deviation $\sigma_d$ is as large as 0.11 mm. As with the results obtained for the deviation $\sigma_n$ in the relative refractive-index difference, the above result is attributable to the following facts. In Examples 19 to 23, the mutual linking of some of the pipes at two longitudinal locations suppressed the maximum value of the magnitude of bending $X_{max}$ to at most 1.20 mm. On the other hand, in Comparative example 5, no mutual linking of pipes at two longitudinal locations allowed a bending as large as 1.50 mm in the magnitude of bending.

As described above, to suppress the deviations in the relative refractive-index difference and in the core diameter, it is effective to maintain the maximum value among the magnitudes of bending at individual longitudinal positions of the material-gas-feeding pipe at a value of at most 1.2 mm, more desirably at most 0.8 mm.

Next, the effect of the maximum cross-sectional area $D_{max}$ among the cross-sectional areas of pipes linked with one another at a plurality of longitudinal locations is explained below. As can be seen from the comparison of the data obtained in Examples 19 to 21, the deviation $\sigma_n$ in the relative refractive-index difference and the deviation $\sigma_d$ in the core diameter tend to become a

better value when "$D_{max}$" is at least 30 mm$^2$, more desirably at least 35 mm$^2$. This result is caused by the fact that as "$D_{max}$" increases, the maximum value of the magnitude of bending $X_{max}$ decreases. In other words, as "$D_{max}$" increases, the effect of the mutual linking of pipes at a plurality of longitudinal locations increases.

To increase "$D_{max}$," one of the following two methods may be employed:

(a) the number $N$ of pipes that are linked with one another at a plurality of longitudinal locations is increased to connect a material-gas-feeding pipe to a pipes that have large cross-sectional areas and that are placed at the outer side (Examples 19, 20, and 21); and

(b) while the number $N$ is maintained constant, the cross-sectional area of the outermost pipe among the pipes linked with one another at a plurality of longitudinal locations is increased (Examples 19, 22, and 23).

In the above-described Examples, the magnitude of bending at the tip of the material-gas-feeding pipe is limited. Of course, it is also important to suppress the magnitude of bending at the tip of other gas-feeding pipes to at most 1.2 mm.

The present invention is described above in connection with what is presently considered to be the most practical and preferred embodiments. However; the invention is not limited to the disclosed embodiments.

The entire disclosure of Japanese patent applications 2003-192916, 2003-192927, and 2003-192930 all filed on July 7, 2003 including the specification, claims, drawing, and summary is incorporated herein by reference in its entirety.

**Claims**

1. A method of producing a glass-particle-deposited body, the method using a burner comprising at its center a material-gas-feeding pipe for ejecting a glass-material gas; the method comprising the steps of:

(a) synthesizing glass particles by using the burner; and

(b) depositing the glass particles onto a starting member; the method being specified by the condition that while the glass particles are synthesized with the burner to be deposited, the magnitude of bending at the tip of the material-gas-feeding pipe is maintained at a value of at most 1.2 mm.

2. A method of producing a glass-particle-deposited body as defined by claim 1, wherein the material-gas-feeding pipe satisfies the relationship of

$$1,975 \leqq L4/D^2 \leqq 1.15 \times 10^9,$$

where $L$ is the length of the pipe, and
    $D$ is the cross-sectional area of the pipe.

3. A method of producing a glass-particle-deposited body as defined by claim 1 or 2, wherein the material-gas-feeding pipe satisfies the relationship of

$$0 \text{ kgf/mm}^2 \leqq W/D \leqq 2.0 \text{ kgf/mm}^2,$$

where $W$ is a load applied to the bottom end of the material-gas-feeding pipe; and
    $D$ is the cross-sectional area of the pipe.

4. A method of producing a glass-particle-deposited body, the method using a burner comprising at its center a material-gas-feeding pipe for ejecting a glass-material gas; the method comprising the steps of:

(a) synthesizing glass particles by using the burner; and
(b) depositing the glass particles onto the starting member; the method being specified by the condition that while the glass particles are synthesized with the burner to be deposited, the magnitude of bending at the bottom end of the material-gas-feeding pipe is maintained at a value of at most 0.3 mm.

5. A method of producing a glass-particle-deposited body as defined by claim 4, wherein the material-gas-feeding pipe satisfies the relationship of

$$1 \leqq M^4/D^2 \leqq 3.81 \times 10^4,$$

where $M$ is the distance between a supporting point and the bottom end of the pipe, and
    $D$ is the cross-sectional area of the pipe.

6. A method of producing a glass-particle-deposited body as defined by claim 4 or 5, wherein the material-gas-feeding pipe satisfies the relationship of

$$0 \text{ kgf/mm}^2 \leq W/D \leq 0.36 \text{ kgf/mm}^2,$$

where $W$ is a load applied to the bottom end of the material-gas-feeding pipe; and
    $D$ is the cross-sectional area of the pipe.

7. A method of producing a glass-particle-deposited body as defined by any one of claims 4 to 6, wherein the material-gas-feeding pipe is supported by applying to it a load in the direction opposite to that of another load applied to the bottom end of the material-gas-feeding pipe.

8. A method of producing a glass-particle-deposited body as defined by claim 1 or 4, wherein:

(a) the burner further comprises a plurality of gas-feeding pipes for feeding a plurality of gases needed to form a flame for combusting the glass-material gas; and
(b) at least one combination of neighboring two pipes among the material-gas-feeding pipe and the gas-feeding pipes, the two pipes being mutually linked at a plurality of longitudinal locations, the at least one combination being or including the combination of the material-gas-feeding pipe and the neighboring pipe.

**9.** A glass-particle-synthesizing burner, comprising at its center a material-gas-feeding pipe for ejecting a glass-material gas;
the material-gas-feeding pipe satisfying the relationship of

$$1{,}975 \leqq L^4/D^2 \leqq 1.15 \times 10^9,$$

where $L$ is the length of the pipe, and
$D$ is the cross-sectional area of the pipe.

**10.** A glass-particle-synthesizing burner, comprising at its center a material-gas-feeding pipe for ejecting a glass-material gas;
the material-gas-feeding pipe satisfying the relationship of

$$1 \leqq M^4/D^2 \leqq 3.81 \times 10^4,$$

where $M$ is the distance between a supporting point and the bottom end of the pipe, and
$D$ is the cross-sectional area of the pipe.

**11.** A burner for producing a glass-particle-deposited body, the burner comprising:

(a) a material-gas-feeding pipe for ejecting a glass-material gas; and
(b) a plurality of gas-feeding pipes for feeding a plurality of gases needed to form a flame for combusting the glass-material gas;

in the burner, at least one combination of neighboring two pipes among the material-gas-feeding pipe and the gas-feeding pipes, the two pipes being mutually linked at a plurality of longitudinal locations.

**12.** A burner for producing a glass-particle-deposited body as defined by claim 11, wherein in the at least one combination of neighboring two pipes mutually linked at a plurality of longitudinal locations, the pipe having the maximum cross-sectional area has a cross-sectional area of at least 30 mm$^2$.

**13.** A burner for producing a glass-particle-deposited body as defined by claim 11 or 12, wherein among the material-gas-feeding pipe and the gas-feeding pipes, a pipe placed at the outer side has a cross-sectional area larger than that of a pipe placed at the inner side.

**14.** A method of producing a glass-particle-deposited body, the method using a burner for producing a glass-particle-deposited body, the burner being as defined by any one of claims 11 to 13;
the method comprising the steps of:

(a) synthesizing glass particles by using the burner; and
(b) depositing the glass particles onto a starting member.

FIG. 1

FIG. 2A

FIG. 2B

FIG. 3A

FIG. 3B

FIG. 4A

FIG. 4B

FIG. 5

FIG. 6A

FIG. 6B

FIG. 6C

## FIG. 6D

## FIG. 7A

FIG. 7B

FIG. 8A

FIG. 8B

FIG. 9A

FIG. 9B

FIG. 10A

Target region

σ n(%)

0. 45
0. 4
0. 35
0. 3
0. 25
0. 2
0. 15
0. 1
0. 05
0

−1.000    −0.500    0.000

Magnitude of bending X₂ (mm)

FIG. 10B

Target region

σ d(mm)

0. 45
0. 4
0. 35
0. 3
0. 25
0. 2
0. 15
0. 1
0. 05
0

−1.000    −0.500    0.000

Magnitude of bending X₂ (mm)

FIG. 11A

FIG. 11B

FIG. 12

FIG. 13A

Cladding | Core | Cladding

FIG. 13B

Cladding | Core | Cladding

FIG. 13C

Cladding | Core | Cladding

**European Patent Office**

## EUROPEAN SEARCH REPORT

Application Number

EP 04 01 5874

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 254 867 A (CORNING INC) 6 November 2002 (2002-11-06) * paragraphs [0012], [0052], [0053] * * figures 5,6 * ----- | 1,2,4,5, 7-14 | C03B37/014 |
| X | US 4 474 593 A (POTKAY EUGENE ET AL) 2 October 1984 (1984-10-02) * column 1, lines 50-57 * * column 2, line 25 - line 32 * * figures 2,3 * ----- | 8,11-14 | |

TECHNICAL FIELDS
SEARCHED (Int.Cl.7)

C03B

The present search report has been drawn up for all claims

| Place of search | Date of completion of the search | Examiner |
|---|---|---|
| Munich | 15 October 2004 | González-Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 5874

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2004

| Patent document cited in search report | | Publication date | Patent family member(s) | | Publication date |
|---|---|---|---|---|---|
| EP 1254867 | A | 06-11-2002 | US | 5599371 A | 04-02-1997 |
| | | | EP | 1254867 A2 | 06-11-2002 |
| | | | EP | 0978491 A2 | 09-02-2000 |
| | | | AU | 689699 B2 | 02-04-1998 |
| | | | AU | 4643996 A | 24-07-1996 |
| | | | CA | 2208066 A1 | 11-07-1996 |
| | | | DE | 69518092 D1 | 24-08-2000 |
| | | | DE | 69518092 T2 | 21-12-2000 |
| | | | DE | 69529778 D1 | 03-04-2003 |
| | | | EP | 0800490 A2 | 15-10-1997 |
| | | | JP | 11510778 T | 21-09-1999 |
| | | | JP | 3182730 B2 | 03-07-2001 |
| | | | WO | 9620898 A2 | 11-07-1996 |
| | | | US | 5922100 A | 13-07-1999 |
| US 4474593 | A | 02-10-1984 | US | 4417692 A | 29-11-1983 |
| | | | CA | 1199533 A1 | 21-01-1986 |
| | | | DE | 3371291 D1 | 11-06-1987 |
| | | | DE | 3377791 D1 | 29-09-1988 |
| | | | EP | 0105926 A1 | 25-04-1984 |
| | | | EP | 0178032 A1 | 16-04-1986 |
| | | | GB | 2119079 A ,B | 09-11-1983 |
| | | | WO | 8303777 A1 | 10-11-1983 |

EPO FORM P0459

For more details about this annex : see Official Journal of the European Patent Office, No. 12/82